(19) Europäisches Patentamt
European Patent Office
Office européen des brevets

(11) **EP 4 776 060 A1**

(12) **EUROPEAN PATENT APPLICATION**
published in accordance with Art. 153(4) EPC

(43) Date of publication:
**15.07.2026 Bulletin 2026/29**

(21) Application number: **24862592.3**

(22) Date of filing: **22.08.2024**

(51) International Patent Classification (IPC):
*G03B 17/56* (2021.01)   *F16M 11/04* (2006.01)
*H04N 23/60* (2023.01)   *H04N 23/63* (2023.01)

(52) Cooperative Patent Classification (CPC):
**F16M 11/04; G03B 17/56; H04N 23/60; H04N 23/63**

(86) International application number:
**PCT/JP2024/029767**

(87) International publication number:
**WO 2025/052939 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 JP 2023146244**

(71) Applicant: **Sony Group Corporation
Tokyo 108-0075 (JP)**

(72) Inventor: **SUGIE Yuki
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **CAMERA SYSTEM AND SIGNAL PROCESSING DEVICE**

(57)    The present disclosure relates to a camera system and a signal processing apparatus that enable rattling to be easily checked in attachment of an imaging camera and a sensor unit.

A camera system includes: an imaging camera that includes an inertial sensor; a sensor unit that includes an inertial sensor; and a signal processing apparatus that performs rattling detection on the sensor unit attached to the imaging camera. The signal processing apparatus includes: a first direction determination unit that determines a predetermined axial direction of the imaging camera from a sensor signal of the inertial sensor of the imaging camera; a second direction determination unit that determines an axial direction of the sensor unit from a sensor signal of the inertial sensor of the sensor unit, the axial direction being identical to the predetermined axial direction of the imaging camera; and an orientation determination unit that compares axial directions of the imaging camera and the sensor unit, and performs the rattling detection. The technology of the present disclosure can be applied to, for example, a camera system in which a sensor unit is attached to an imaging camera, or the like.

FIG. 7

**Description**

TECHNICAL FIELD

The present disclosure relates to a camera system and a signal processing apparatus, and in particular, a camera system and a signal processing apparatus that have enabled rattling to be easily checked in attachment of an imaging camera and a sensor unit.

BACKGROUND ART

There is a camera tracking system in which a sensor unit is attached to an imaging camera and the sensor unit tracks a movement of the imaging camera. In the camera tracking system, in attaching the sensor unit to the imaging camera, for example, if screwing is loose, rattling occurs between the imaging camera and the sensor unit. As described in, for example, Patent Document 1, there is a device such as an orientation stabilization device that includes a mount to which a camera can be attached and maintains an orientation of the mount constant, but there is no device that detects rattling between the imaging camera and the sensor unit.

CITATION LIST

PATENT DOCUMENT

Patent Document 1: WO 2018/016514 A

SUMMARY OF THE INVENTION

PROBLEMS TO BE SOLVED BY THE INVENTION

In general, rattling is checked by a user evaluating a degree of rattling with the hand when housings have been fixed to each other. However, in checking with the hand, there is a possibility that rattling in a certain specified direction will be forgotten to be checked. Furthermore, there is a possibility that a case where a degree of rattling gradually increases in accordance with a change over time will not be noticed.
The present disclosure has been made in view of such a situation, and an object of the present disclosure is to enable rattling to be easily checked in attachment of an imaging camera and a sensor unit.

SOLUTIONS TO PROBLEMS

A camera system in a first aspect of the present disclosure is
a camera system including:

an imaging camera that includes an inertial sensor;
a sensor unit that includes an inertial sensor; and
a signal processing apparatus that performs rattling detection on the sensor unit attached to the imaging camera,
in which the signal processing apparatus includes:

a first direction determination unit that determines a predetermined axial direction of the imaging camera from a sensor signal of the inertial sensor of the imaging camera;
a second direction determination unit that determines an axial direction of the sensor unit from a sensor signal of the inertial sensor of the sensor unit, the axial direction being identical to the predetermined axial direction; and
an orientation determination unit that compares the axial directions of the imaging camera and the sensor unit, and performs the rattling detection.

In the first aspect of the present disclosure, an imaging camera that includes an inertial sensor, a sensor unit that includes an inertial sensor, and a signal processing apparatus that performs rattling detection on the sensor unit attached to the imaging camera, are provided. In the signal processing apparatus, a predetermined axial direction of the imaging camera is determined from a sensor signal of the inertial sensor of the imaging camera, an axial direction of the sensor unit is determined from a sensor signal of the inertial sensor of the sensor unit, the axial direction being identical to the predetermined axial direction, and the axial directions of the imaging camera and the sensor unit are compared, and the rattling detection is performed.

A signal processing apparatus in a second aspect of the present disclosure is

a signal processing apparatus including
a display control unit that performs control to display a screen on which rattling detection is performed in attachment of a sensor unit from a sensor signal of the inertial sensor of an imaging camera and a sensor signal of the inertial sensor of the sensor unit attached to the imaging camera,
in which the display control unit performs control to display:

a first screen that issues an instruction of at least one of a swing motion or a stationary state of the imaging camera; and
a second screen that displays a result of comparison between the sensor signal of the inertial sensor of the imaging camera in the stationary state and the sensor signal of the inertial sensor of the sensor unit.

In the second aspect of the present disclosure, control is performed to display a screen on which rattling detection is performed in attachment of a sensor unit from a sensor signal of the inertial sensor of an imaging camera and a sensor signal of the inertial sensor of the sensor unit attached to the imaging camera. Control is performed to display: a first screen that issues an instruction of at least one of a swing motion or a stationary state of the imaging camera; and a second screen that displays a result of comparison between the sensor signal of the inertial sensor of the imaging camera in the stationary state and the sensor signal of the inertial sensor of the sensor unit.

Note that the signal processing apparatuses in the first and second aspects of the present disclosure can be implemented by causing a computer to execute a program. The program that the computer is caused to execute in order to implement the signal processing apparatus can be provided by being transmitted via a transmission medium or by being recorded in a recording medium.

The signal processing apparatus may be an independent apparatus or may be an internal block included in a single apparatus.

BRIEF DESCRIPTION OF DRAWINGS

Fig. 1 is a diagram illustrating an example where a sensor unit has been attached to an imaging camera.
Fig. 2 is a diagram illustrating an example where the sensor unit has been attached to the imaging camera.
Fig. 3 is a diagram illustrating a configuration example of a camera system serving as an embodiment of the present disclosure.
Fig. 4 is a block diagram illustrating a configuration example of the camera system of Fig. 3.
Fig. 5 is a diagram explaining details of rattling detection.
Fig. 6 is a diagram explaining details of rattling detection.
Fig. 7 is a diagram explaining details of rattling detection.
Fig. 8 is a diagram illustrating an example of a screen displayed in rattling detection processing.
Fig. 9 is a diagram illustrating an example of a screen displayed in rattling detection processing.
Fig. 10 is a diagram illustrating an example of a screen displayed in rattling detection processing.
Fig. 11 is a diagram illustrating an example of a screen displayed in rattling detection processing.
Fig. 12 is a diagram illustrating an example of a screen displayed in rattling detection processing.
Fig. 13 is a flowchart explaining rattling detection processing in a manual mode.
Fig. 14 is a flowchart explaining rattling detection processing in an automatic mode.
Fig. 15 is a block diagram illustrating a configuration example of a computer serving as a signal processing apparatus.

MODE FOR CARRYING OUT THE INVENTION

Hereinafter, a mode for carrying out the technology of the present disclosure (hereinafter referred to as an embodiment) will be described with reference to the accompanying drawings. Note that, herein and in the drawings, components having substantially the same functional configuration are denoted by the same reference sign, and therefore a duplicate description is omitted. Description will be provided in the following order.

1. Factor of occurrence of rattling
2. Configuration example of camera system
3. Detailed description of rattling detection
4. Rattling detection UI

5. Flowchart of rattling detection processing in manual mode
6. Flowchart of rattling detection processing in automatic mode
7. Computer configuration example

<1. Factor of occurrence of rattling>

In a tracking system, a sensor unit is attached to a target object to be tracked, and a movement of the target object is tracked. In a case where the target object is an imaging camera, the sensor unit is attached to the imaging camera.

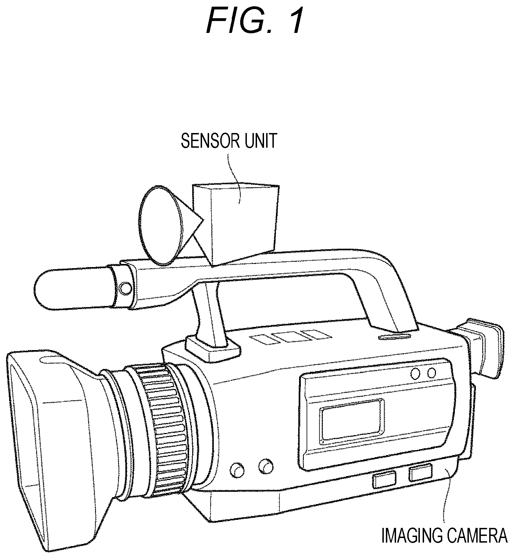

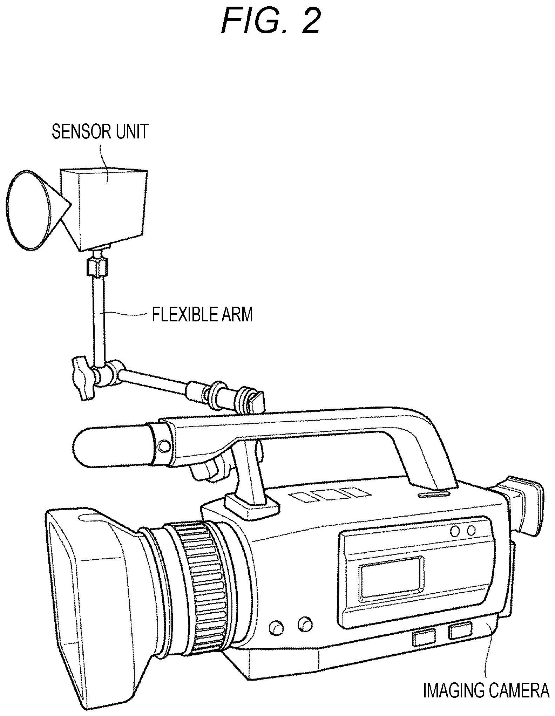

Figs. 1 and 2 illustrate examples where the sensor unit has been attached to the imaging camera.
Fig. 1 illustrates an example where the sensor unit has been directly attached to a handle of the imaging camera.
Fig. 2 illustrates an example where the sensor unit has been attached to the imaging camera by using a flexible arm.
In a case where the sensor unit is directly attached to the handle of the imaging camera, as illustrated in Fig. 1, rattling is less likely to occur. On the other hand, in a case where the sensor unit is attached by using the flexible arm, as illustrated in Fig 2, rattling is likely to occur. In addition, there is also a method of attaching the sensor unit to the imaging camera by using a rig or the like, and a method of attaching the sensor unit varies depending on a user. At the time of attachment, for example, loose screwing causes rattling between the imaging camera and the sensor unit. Here, rattling refers to a state where there is a movable gap or margin between the imaging camera and the sensor unit, and one can slightly move (vibrate) in a state where the other is fixed (stationary). In a case where the target object to be tracked is the imaging camera, the imaging camera serves as a reference, and thus rattling occurs in the sensor unit. If the rattling has occurred, the sensor unit vibrates although the imaging camera to be tracked is in a stationary state, and vibration noise of the sensor unit is superimposed onto tracking data.
In view of the above, in the description below, a system is proposed that enables rattling to be easily checked in attachment of a sensor unit in a tracking system in which the sensor unit has been attached to an imaging camera with the imaging camera as a target object to be tracked.

<2. Configuration example of camera system>

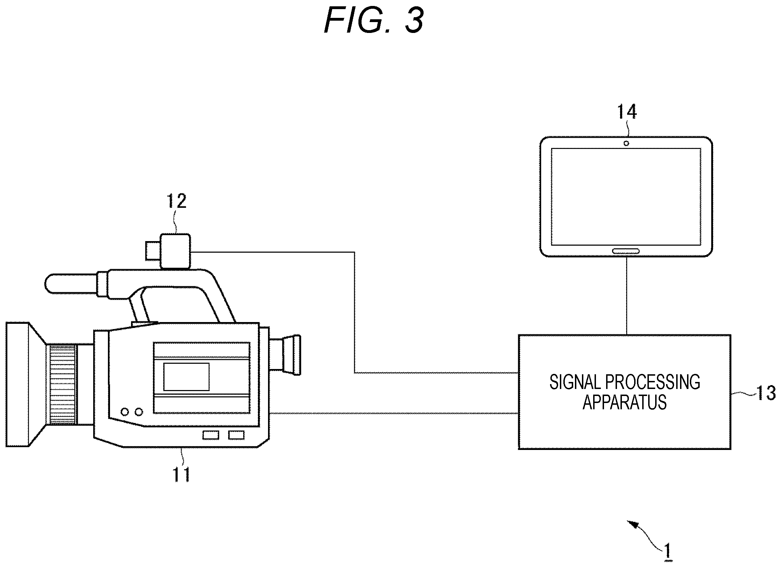

Fig. 3 illustrates a configuration example of a camera system serving as an embodiment of the present disclosure.
A camera system 1 illustrated in Fig. 3 includes at least an imaging camera 11, a sensor unit 12, a signal processing apparatus 13, and a display device 14. The imaging camera 11, the sensor unit 12, the signal processing apparatus 13, and the display device 14 are connected to be communicable with each other through an arbitrary communication interface, such as a universal serial bus (USB), a high-definition multimedia interface (HDMI) (registered trademark), Bluetooth (registered trademark), Wi-Fi, or a local area network (LAN), regardless of a wired or wireless type.
The camera system 1 is part of a system that tracks a movement of the imaging camera 11 by using the sensor unit 12 attached to the imaging camera 11. The camera system 1 is configured to be able to easily check rattling of the sensor unit 12 attached to the imaging camera 11.

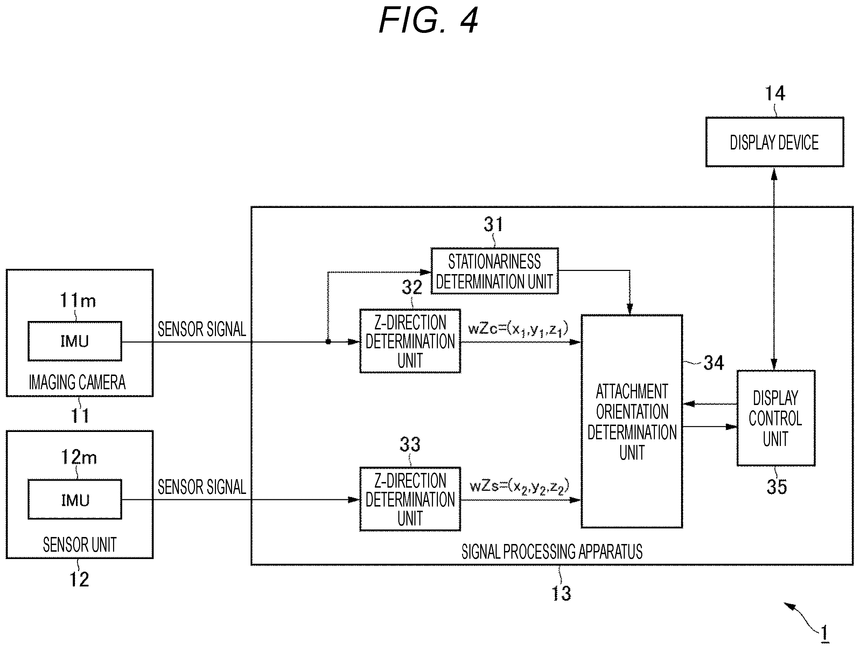

Fig. 4 is a block diagram illustrating a configuration example of the camera system 1 of Fig. 3.
The camera system 1 includes at least the imaging camera 11, the sensor unit 12, the signal processing apparatus 13, and the display device 14, as described above.
The imaging camera 11 includes, for example, an imaging lens, an image sensor, a signal processing processor, and the like (all not illustrated), and further includes at least an IMU 11m. The sensor unit 12 includes, for example, an image sensor, a depth sensor, and the like (all not illustrated), and further includes at least an IMU 12m. The IMU 11m is, for example, an inertial sensor including a triaxial acceleration sensor and a triaxial angular velocity sensor, and outputs, to the signal processing apparatus 13, sensor signals of acceleration and angular velocity in directions of three axes, an X axis, a Y axis, and a Z axis. The IMU 11m is attached inside the imaging camera 11, for example, in such a way that a positive direction of the Z axis is an upward direction (a ceiling direction). The IMU 12m is, for example, an inertial sensor including a triaxial acceleration sensor and a triaxial angular velocity sensor, and outputs, to the signal processing apparatus 13, sensor signals of acceleration and angular velocity in directions of three axes, the X axis, the Y axis, and the Z axis. The IMU 12m is attached inside the sensor unit 12, for example, in such a way that the positive direction of the Z axis is the upward direction (the ceiling direction). Note that the IMU 11m and the IMU 12m are assumed to be attached in such a way that the upward direction is the positive direction of the Z axis for convenience of description, but are not limited to this example, and can be attached in an arbitrary axial direction. The sensor signals output from the IMU 11m are signals of acceleration and angular velocity in directions of three axes, the X axis, the Y axis, and the Z axis, in a coordinate system that the IMU 11m itself in the imaging camera 11 has (hereinafter referred to as a camera IMU coordinate system). Furthermore, the sensor signals output from the IMU 12m are signals of acceleration and angular velocity in directions of three axes, the X axis, the Y axis, and the Z axis, in a coordinate system that the IMU 12m itself in the sensor unit 12 has (hereinafter referred to as a sensor unit IMU coordinate system).

The signal processing apparatus 13 is an apparatus that performs rattling detection on the sensor unit 12 attached to the imaging camera 11. After having been attached to not rattle, the signal processing apparatus 13 performs signal processing for tracking a movement (a position and an orientation) of the imaging camera 11 by performing, for example, simultaneous localization and mapping (SLAM), by using the sensor signal from the IMU 12m of the sensor unit 12 and a captured image from a not-illustrated image sensor. The signal processing apparatus 13 includes, for example, a central processing unit (CPU), a micro processing unit (MPU), a system on a chip (SoC), a graphics processing unit (GPU), a general-purpose computing on graphics processing units (GPGPU), an artificial intelligence (AI) processor, or the like.

The signal processing apparatus 13 includes a stationariness determination unit 31, Z-direction determination units 32 and 33, an attachment orientation determination unit 34, and a display control unit 35 regarding rattling detection processing. The sensor signal output from the IMU 11m of the imaging camera 11 is input to the stationariness determination unit 31, and the Z-direction determination unit 32 serving as the first direction determination unit. The sensor signal output from the IMU 12m of the sensor unit 12 is input to the Z-direction determination unit 33 serving as the second direction determination unit.

The stationariness determination unit 31 determines whether or not the imaging camera 11 is stationary, by using the sensor signal of the imaging camera 11. Specifically, in a case where it can be determined that the speed calculated from a sensor signal output from the acceleration sensor of the IMU 11m is roughly 0 (it can approximate to 0 within a predetermined threshold), the stationariness determination unit 31 determines that the imaging camera 11 is stationary. In a case where it has been determined that the imaging camera 11 is stationary, the stationariness determination unit 31 supplies a determination signal indicating a stationary state to the attachment orientation determination unit 34.

The Z-direction determination unit 32 determines a Z direction ${}_wZ_c$ of the imaging camera 11 as a device Z-direction from the sensor signal of the IMU 11m of the imaging camera 11. Although details will be described later, the Z direction ${}_wZ_c$ indicates a Z direction after conversion obtained by converting a unit vector of the camera IMU coordinate system into a world coordinate system. The Z-direction determination unit 32 supplies the attachment orientation determination unit 34 with the Z direction ${}_wZ_c$ of the imaging camera 11 = $(x_1, y_1, z_1)$, the Z direction ${}_wZ_c$ being a determination result.

The Z-direction determination unit 33 determines a Z direction ${}_wZ_s$ of the sensor unit 12 as a device Z-direction from the sensor signal of the IMU 12m of the sensor unit 12. Although details will be described later, the Z direction ${}_wZ_s$ indicates a Z direction after conversion obtained by converting a unit vector of the sensor unit IMU coordinate system into the world coordinate system. The Z-direction determination unit 33 supplies the attachment orientation determination unit 34 with the Z direction ${}_wZ_s$ of the sensor unit 12 = $(x_2, y_2, z_2)$, the Z direction ${}_wZ_s$ being a determination result.

The attachment orientation determination unit 34 compares the Z direction ${}_wZ_c$ of the imaging camera 11 with the Z direction ${}_wZ_s$ of the sensor unit 12, the Z direction ${}_wZ_c$ and the Z direction ${}_wZ_s$ being the same axial directions of the imaging camera 11 and the sensor unit 12, and performs rattling detection. The attachment orientation determination unit 34 supplies a result of rattling detection to the display control unit 35.

The display control unit 35 generates a control signal of a screen relating to the rattling detection processing, and supplies the control signal to the display device 14. For example, the display control unit 35 generates a control signal of a screen for performing rattling detection or a screen indicating a result of rattling detection, and supplies the control signal to the display device 14. Furthermore, the display control unit 35 instructs the attachment orientation determination unit 34 to perform predetermined processing, for example, performing again of rattling detection, or the like, on the basis of an operation performed by a user on a screen that the display device 14 has been caused to display.

The display device 14 includes, for example, a liquid crystal display (LCD), an organic electro-luminescence (EL) panel, or the like, and displays a screen of a rattling detection result or the like under the control of the display control unit 35. The display device 14 may be an information processing apparatus including a display device, such as a smartphone, a tablet, or a personal computer. The display device 14 may be incorporated as a display unit into the signal processing apparatus 13 and may be configured integrally with the signal processing apparatus 13.

The camera system 1 has the configuration described above regarding rattling detection.

<3. Detailed description of rattling detection>

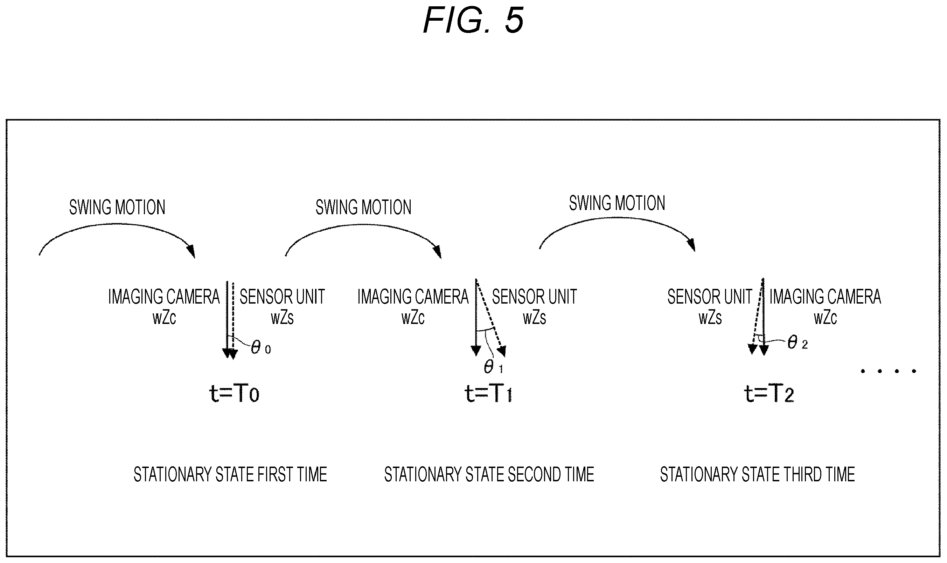

Details of rattling detection performed by the attachment orientation determination unit 34 will be described with reference to Figs. 5 to 7.

The signal processing apparatus 13 causes a user to perform a pre-motion (hereinafter referred to as a swing motion) from which a movement of a housing of the imaging camera 11 can be discovered in directions of three axes. Thereafter, the stationariness determination unit 31 determines that the imaging camera 11 is stationary. Then, in a state where the imaging camera 11 is stationary, the attachment orientation determination unit 34 compares the Z direction ${}_wZ_c$ of the imaging camera 11 with the Z direction ${}_wZ_s$ of the sensor unit 12, and compares attachment orientations of the imaging camera 11 and the sensor unit 12, and in other words, three movements (3DoF) around the X axis, the Y axis, and the Z axis. The swing motion and the comparison process are performed a plurality of times.

Assuming, for example, that the swing motion and the comparison process are performed five times in total, as illustrated in Fig. 5, after a first swing motion and at time t = $T_0$, when a first stationary state has been determined, the Z direction $_wZ_c$ of the imaging camera 11 and the Z direction $_wZ_s$ of the sensor unit 12 are compared, and a difference $\theta_0$ between the Z direction $_wZ_c$ and the Z direction $_wZ_s$ is calculated. Furthermore, after a second swing motion and at time t = $T_1$, when a second stationary state has been determined, the Z direction $_wZ_c$ of the imaging camera 11 and the Z direction $_wZ_s$ of the sensor unit 12 are compared, and a difference $\theta_1$ between the Z direction $_wZ_c$ and the Z direction $_wZ_s$ is calculated. Furthermore, after a third swing motion and at time t = $T_2$, when a third stationary state has been determined, the Z direction $_wZ_c$ of the imaging camera 11 and the Z direction $_wZ_s$ of the sensor unit 12 are compared, and a difference $\theta_2$ between the Z direction $_wZ_c$ and the Z direction $_wZ_s$ is calculated. Hereinafter, similar processing is performed up to the fifth time.

Next, the attachment orientation determination unit 34 performs rattling detection on the basis of a plurality of (five) results of comparison.

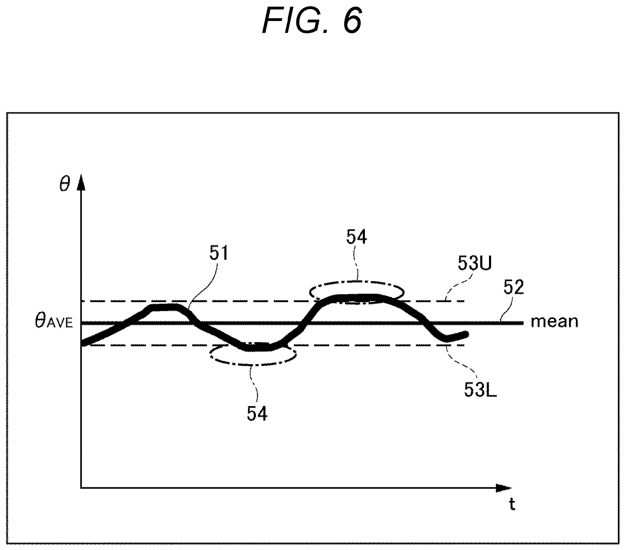

Fig. 6 illustrates an example of a screen displayed on the display device 14 as a result of rattling detection based on the plurality of (five) results of comparison made by the attachment orientation determination unit 34.

The screen of Fig. 6 displays a graph that continuously indicates, in time series, five differences $\theta_1$ to $\theta_5$ between the Z direction $_wZ_c$ and the Z direction $_wZ_s$ as the result of rattling detection. In the graph, a waveform 51 is a line that continuously indicates the differences $\theta_1$ to $\theta_5$ in time series, and a straight line 52 at the center of the waveform 51 indicates an average $\theta_{AVE}$ of the waveform 51 (the differences $\theta_1$ to $\theta_5$). Broken lines 53U and 53L illustrated above and below the straight line 52 are a threshold at which it is determined that rattling has occurred, relative to the average $\theta_{AVE}$ of the waveform 51 (the differences $\theta_1$ to $\theta_5$). The threshold can be set on the basis of, for example, an angle of rotation at which the sensor unit 12 can be subjectively perceived to be inclined in an HD image, or the like, and can be set to, for example, $\pm0.1°$. On the graph, portions that exceed the broken lines 53U and 53L of the threshold and have a large variation in the waveform 51 are clearly illustrated to be able to be identified. In the example of Fig. 5, the portions that exceed the broken lines 53U and 53L of the threshold in the waveform 51 are surrounded by an ellipse with a dash-dotted line, and are illustrated as displays 54 indicating a warning of the necessity of rattling adjustment. The display 54 indicating the warning is not limited to this example. For example, the portions that exceed the broken lines 53U and 53L in the waveform 51 may be displayed to be color-coded in a color different from that of the other portion of the waveform 51, or may be colored in a color different from that of the waveform 51 in a superimposed manner to be able to be identified. If a variation range of the waveform 51 with the straight line 52 indicating the average $\theta_{AVE}$ as a center does not exceed the threshold, it is determined that no rattling has occurred.

The attachment orientation determination unit 34 supplies the display control unit 35 with a graph in which the waveform 51 of a plurality of differences $\theta$, the straight line 52 indicating an average and the broken lines 53U and 53L of the threshold are displayed in a superimposed manner, as illustrated in Fig. 6, as the result of rattling detection.

Note that the swing motion is performed by instructing a user to perform the swing motion by using a screen or sound in some cases, and in a case where the rattling detection processing is performed in the background (automatically) without causing the user to recognize the rattling detection processing, the user's normal motion during use of the camera is regarded as the swing motion in some cases. Stated another way, the swing motion includes a case where the user is explicitly caused to perform the swing motion and a case where the user is not explicitly caused to perform the swing motion.

The attachment orientation determination unit 34 detects rattling by comparing the Z direction $_wZ_c$ of the imaging camera 11 with the Z direction $_wZ_s$ of the sensor unit 12. Here, the Z directions $_wZ_c$ and $_wZ_s$ indicate Z directions after conversion obtained by converting Z directions of the camera IMU coordinate system and the sensor unit IMU coordinate system into the world coordinate system.

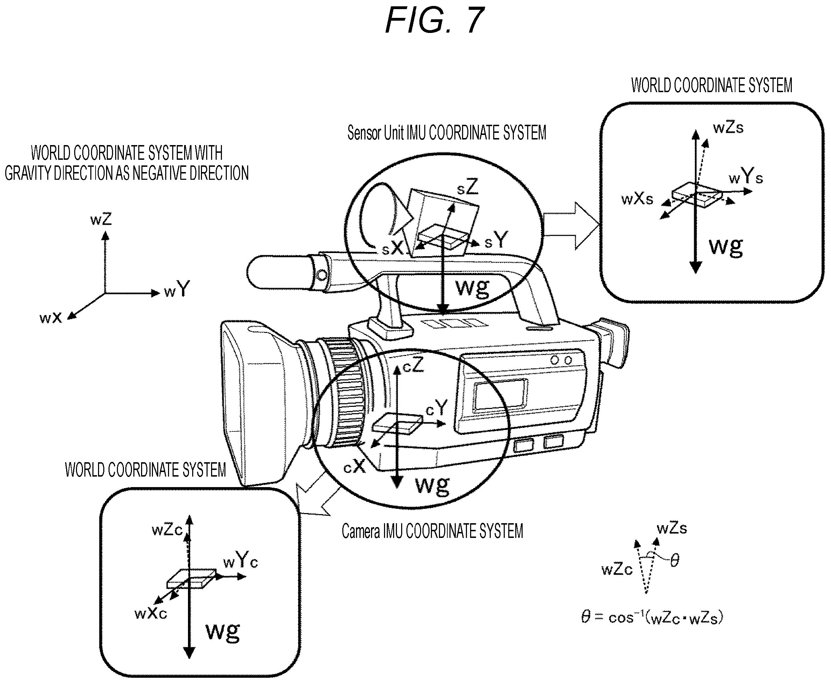

Fig. 7 is a diagram explaining conversion of the camera IMU coordinate system and the sensor unit IMU coordinate system into the world coordinate system.

First, it is assumed that a unit vector of the camera IMU coordinate system is $(_cX, _cY, _cZ)$, a unit vector of the sensor unit IMU coordinate system is $(_sX, _sY, _sZ)$, and the world coordinate system is $(_wX, _wY, _wZ)$.

The world coordinate system $(_wX, _wY, _wZ)$ can be defined as described in Formula (1) described below. In Formula (1), the world coordinate system $(_wX, _wY, _wZ)$ is defined by setting a temporary X-axis unit vector $_wX_{tmp}$, assuming the gravity direction $ig_w$ to be -z, and calculating an outer product (x).

$$_wX_{tmp} = (1,\ 0,\ 0)$$
$$_wZ = -_ig_w/|_ig_w|$$
$$_wY = _wZ \times _wX_{tmp}$$
$$_wX = _wY \times _wZ \quad \ldots\ldots\ldots\ldots\ldots (1)$$

The unit vector $(_wX_c, _wY_c, _wZ_c)$ expressing the unit vector $(_cX, _cY, _cZ)$ of the camera IMU coordinate system on the world coordinate system $(_wX, _wY, _wZ)$ can be calculated according to Formula (2) by using an inner product $(\cdot)$, and the unit vector $(_wX_s, _wY_s, _wZ_s)$ expressing the unit vector $(_sX, _sY, _sZ)$ of the sensor unit IMU coordinate system on the world coordinate system $(_wX, _wY, _wZ)$ can be calculated according to Formula (3) by using the inner product $(\cdot)$.

$$_wX_c = {_cX} \cdot {_wX} + {_cX} \cdot {_wY} + {_cX} \cdot {_wZ}$$
$$_wY_c = {_cY} \cdot {_wY} + {_cY} \cdot {_wY} + {_cY} \cdot {_wZ}$$
$$_wZ_c = {_cZ} \cdot {_wZ} + {_cZ} \cdot {_wY} + {_cZ} \cdot {_wZ} \quad \ldots\ldots\ldots\ldots (2)$$

$$_wX_s = {_sX} \cdot {_wX} + {_sX} \cdot {_wY} + {_sX} \cdot {_wZ}$$
$$_wY_s = {_sY} \cdot {_wY} + {_sY} \cdot {_wY} + {_sY} \cdot {_wZ}$$
$$_wZ_s = {_sZ} \cdot {_wZ} + {_sZ} \cdot {_wY} + {_sZ} \cdot {_wZ} \quad \ldots\ldots\ldots\ldots (3)$$

At this time, an angle $\theta$ formed by the Z direction $_wZ_c$ of the imaging camera 11 and the Z direction $_wZ_s$ of the sensor unit 12 is expressed as follows.

$$\theta = \cos^{-1}({_wZ_c} \cdot {_wZ_s}) \quad \ldots\ldots\ldots\ldots\ldots (4)$$

Hereinafter, the angle $\theta$ formed by the Z direction $_wZ_c$ of the imaging camera 11 and the Z direction $_wZ_s$ of the sensor unit 12 is also referred to as a rattling component $\theta$.

<4. Rattling detection UI>

Next, a screen displayed on the display device 14 under the control of the display control unit 35 and a user's operation in a case where the rattling detection processing is performed will be described.

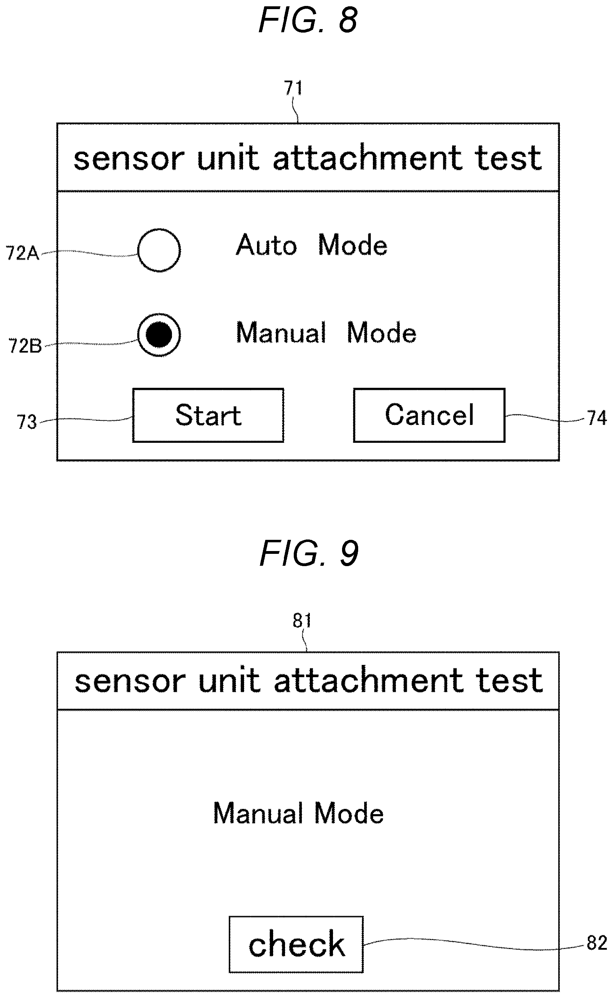

Fig. 8 illustrates an example of an initial screen displayed in performing the rattling detection processing.

The initial screen 71 of Fig. 8 includes radio buttons 72A and 72B that can select an automatic mode (a first mode) and a manual mode (a second mode). When a user has selected either the automatic mode or the manual mode and has selected (pressed) a start button 73, the selected mode is performed. The automatic mode is a mode of automatically performing the rattling detection processing in the background without causing the user to recognize the rattling detection processing. The manual mode is a mode of performing the rattling detection processing by causing the user to perform a predetermined swing motion according to a screen. In a case where a cancel button 74 has been selected (pressed), the initial screen 71 is erased.

In a case where the rattling detection processing is performed in the manual mode, the user selects the radio button 72B and selects the start button 73. When an instruction to perform the manual mode has been issued, the manual mode start screen of Fig. 9 is displayed.

Fig. 9 illustrates an example of a manual mode start screen indicating the start of the manual mode.

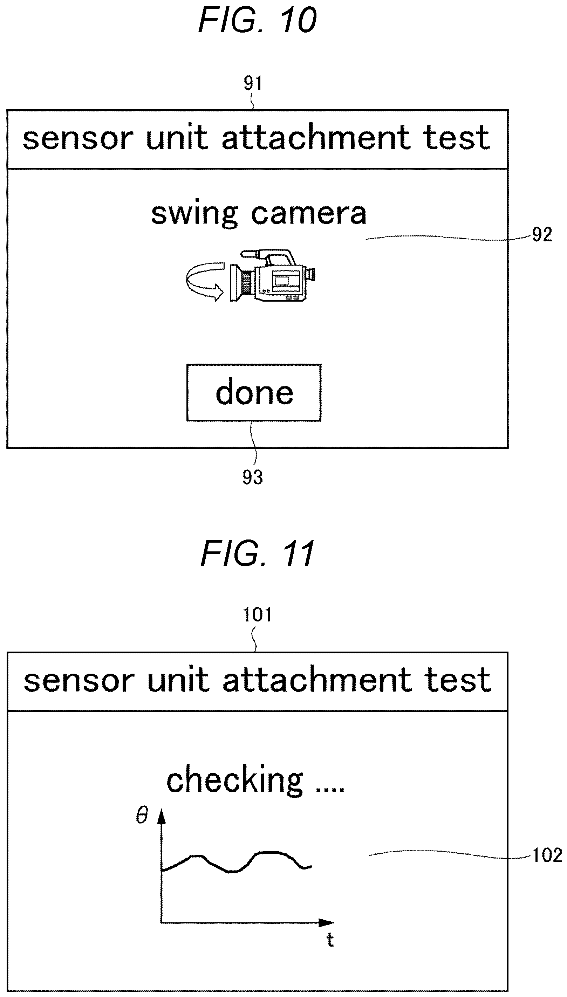

On the manual mode start screen 81 of Fig. 9, the characters "Manual Mode" indicating the manual mode and a check button 82 are displayed. When the check button 82 has been selected (pressed), the manual mode is started, and the swing motion instruction screen of Fig. 10 is displayed.

Fig. 10 illustrates an example of a swing motion instruction screen (a first screen) on which instructions of a swing motion and a stationary state are issued.

The swing motion instruction screen 91 of Fig. 10 displays a motion instruction 92 for instructing a user to perform the swing motion, and a terminate button 93 that is selected (pressed) when the user has terminated the swing motion and it has entered into a stationary state. In the motion instruction 92, the characters "swing camera (please perform a swing motion)" and an illustration of swinging the camera are expressed.

The user performs the swing motion during a predetermined period (for example, several seconds) in accordance with the motion instruction 92, terminates the swing motion, and then brings the imaging camera 11 into a stationary state. The user selects the terminate button 93 at a timing when the imaging camera 11 has been brought into the stationary state, and issues, to the signal processing apparatus 13, an instruction indicating the stationary state. In a case where the swing motion has been discovered during a certain period or longer, the display control unit 35 may modify the motion instruction 92 to "stop swinging camera (please stop the swing motion)" and may instruct the user to bring the camera into the stationary state. When the terminate button 93 has been selected, the transition is made to a detection period during which the rattling component $\theta$ is detected, and the display control unit 35 causes the display device 14 to display the screen during rattling detection of Fig. 11.

Fig. 11 illustrates an example of a screen during rattling detection (a second screen) displayed during the detection period during which the rattling component θ is detected.

On the screen during rattling detection 101 of Fig. 11, the display control unit 35 displays a graph 102 of the difference θ illustrated in Fig. 6 on the basis of a result of comparison that has been supplied from the attachment orientation determination unit 34. The graph 102 is a graph that corresponds to one of the plurality of results of comparison between the Z direction ${}_wZ_c$ of the imaging camera 11 and the Z direction ${}_wZ_s$ of the sensor unit 12. In a case where a certain time period has elapsed or a change (a vibration) in the difference θ has converged within a predetermined range, one comparison process terminates. The signal processing apparatus 13 transitions to the next (for example, second) comparison process, and the display control unit 35 causes the swing motion instruction screen 91 of Fig. 10 to be displayed again, and the swing motion is performed by the user. The swing motion and the comparison process are performed plural times, and therefore the swing motion instruction screen 91 in Fig. 10 and the screen during rattling detection 101 of Fig. 11 are repeatedly displayed on the display device 14.

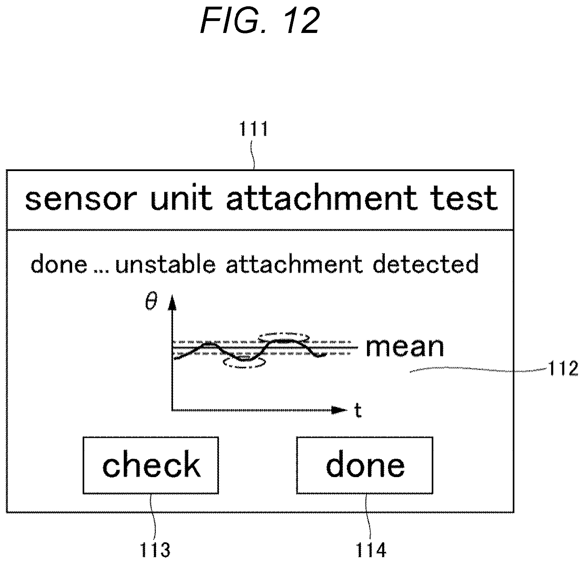

When a certain plural number of comparison processes that has been determined in advance has terminated, the display control unit 35 causes the rattling detection result screen of Fig. 12 to be displayed on the basis of a result of comparison that has been supplied from the attachment orientation determination unit 34.

Fig. 12 illustrates an example of a rattling detection result screen (a third screen) that displays a rattling detection result.

On the rattling detection result screen 111, the message "unstable attachment detected (unstable attachment has been discovered)" and the graph described with reference to Fig. 6 are displayed as a plurality of results of comparison process 112 indicating the rattling detection result. In the portion "mean", an average $\theta_{AVE}$ of a plurality of differences θ calculated by the attachment orientation determination unit 34 is displayed. The average $\theta_{AVE}$ corresponds to an inclination offset of two housings of the imaging camera 11 and the sensor unit 12. In order to accurately know a position of the imaging camera 11 serving as a target to be tracked, it is necessary to know, in advance, an offset amount of the imaging camera 11 and the sensor unit 12. However, the inclination offset of the imaging camera 11 and the sensor unit 12 can also be automatically calculated by performing rattling detection, and therefore it is not necessary to discover the inclination offset of the two housings by using another means.

In a case where there is a period that exceeds a threshold in respective comparison processes after a plurality of swing motions and the rattling detection result is not a good result, the message "unstable attachment detected" and the display 54 indicating the warning described with reference to Fig. 6 are displayed, and therefore the rattling detection result screen 111 also serves as a screen (a fourth screen) prompting rattling adjustment. The user more firmly attaches the sensor unit 12 to the imaging camera 11 (for example, retightening of a screw), and then selects a check button 113. In a case where the check button 113 has been selected, the manual mode start screen 81 of Fig. 9 is displayed again, and the rattling detection processing in the manual mode is started again.

On the other hand, in a case where a favorable rattling detection result has been obtained, the user selects (presses) a terminate button 114. As a result, the rattling detection processing in the manual mode terminates.

<5. Flowchart of rattling detection processing in manual mode>

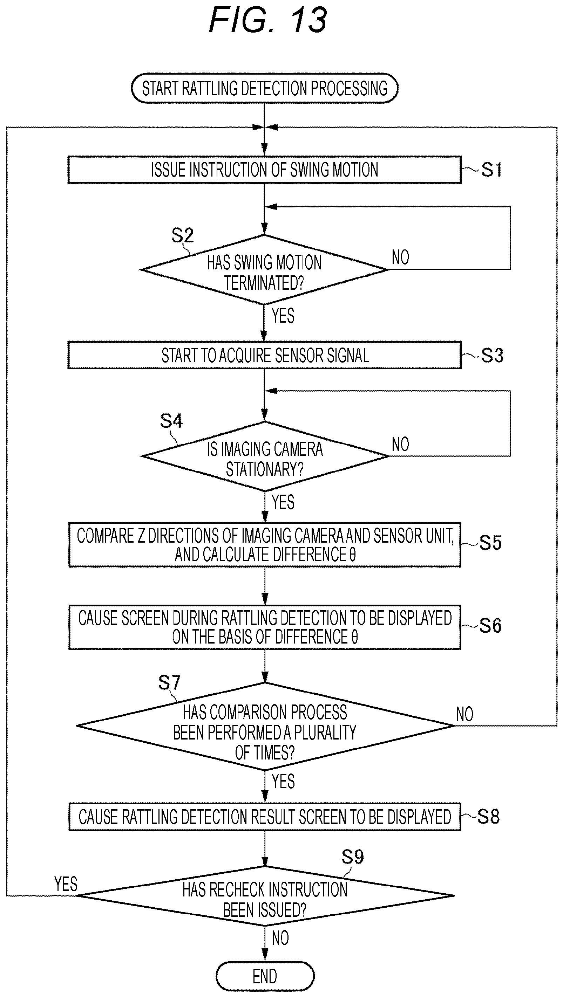

Next, the rattling detection processing in the manual mode will be described with reference to the flowchart of Fig. 13. This processing is, for example, processing after the check button 82 has been pressed on the manual mode start screen 81 of Fig. 9.

First, in step S1, the display control unit 35 causes the swing motion instruction screen 91 of Fig. 10 to be displayed, and instructs a user to perform the swing motion. The user performs the swing motion in accordance with the motion instruction 92 on the swing motion instruction screen 91.

In step S2, the display control unit 35 determines whether the swing motion has terminated, and in other words, whether the terminate button 93 indicating the termination of the swing motion on the swing motion instruction screen 91 of Fig. 10 has been pressed by the user. The display control unit 35 repeats the process of step S2 until it is determined that the swing motion has terminated, and in a case where it has been determined that the swing motion has terminated, this fact is supplied to the attachment orientation determination unit 34, and the processing proceeds to step S3.

In step S3, the Z-direction determination units 32 and 33 start to acquire respective sensor signals supplied from the imaging camera 11 and the sensor unit 12, and supply the Z directions ${}_wZ_c$ and ${}_wZ_s$ to the attachment orientation determination unit 34. In step S3 and steps that follow, the acquisition of the sensor signals is continuously performed until the rattling detection processing terminates.

In step S4, the attachment orientation determination unit 34 determines whether or not the imaging camera 11 is stationary. The attachment orientation determination unit 34 determines whether or not the imaging camera 11 is stationary on the basis of whether or not a determination signal indicating a stationary state has been supplied from the stationariness determination unit 31. The process of step S4 is repeated until it is determined that the imaging camera 11 is stationary, and in a case where it has been determined that the imaging camera 11 is stationary, the processing proceeds to step S5. Note that, in the manual mode, the terminate button 93 is pressed when the user has terminated the swing motion and has brought the imaging camera 11 into the stationary state, and therefore the process of step S4 may be omitted.

In step S5, the attachment orientation determination unit 34 compares the Z direction $_wZ_c$ of the imaging camera 11 with the Z direction $_wZ_s$ of the sensor unit 12, calculates a difference $\theta$, and supplies the difference $\theta$ to the display control unit 35.

In step S6, the display control unit 35 causes the display device 14 to display the screen during rattling detection 101 of Fig. 11 on the basis of the difference $\theta$ supplied from the attachment orientation determination unit 34. Steps S5 and S6 are performed simultaneously (in parallel), and are performed until a predetermined time period elapses or it is determined that a change (a vibration) in the difference $\theta$ has converged within a predetermined range.

After steps S5 and S6, in step S7, the attachment orientation determination unit 34 determines whether the comparison process has been performed a certain plural number of times that has been determined in advance. In a case where it has been determined in step S7 that the comparison process has not yet been performed the certain plural number of times, the processing returns to step S1, and the processes described above are repeated.

On the other hand, in a case where it has been determined in step S7 that the comparison process has been performed the certain plural number of times, the processing proceeds to step S8, and the display control unit 35 causes the display device 14 to display the rattling detection result screen 111 of Fig. 12 indicating a plurality of results of comparison process.

In step S9, the display control unit 35 determines whether or not an instruction to recheck rattling detection has been issued on the rattling detection result screen 111 of Fig. 12. Stated another way, in a case where the check button 113 has been pressed on the rattling detection result screen 111 of Fig. 12, the display control unit 35 determines that the instruction to recheck rattling detection has been issued. On the other hand, in a case where the terminate button 114 has been pressed on the rattling detection result screen 111 of Fig. 12, the display control unit 35 determines that the instruction to recheck rattling detection has not been issued.

In a case where it has been determined in step S9 that the instruction to recheck rattling detection has been issued, the processing returns to step S1, and the processes described above are performed again. On the other hand, in a case where it has been determined in step S9 that the instruction to recheck rattling detection has not been issued, the rattling detection processing in the manual mode terminates.

<6. Flowchart of rattling detection processing in automatic mode>

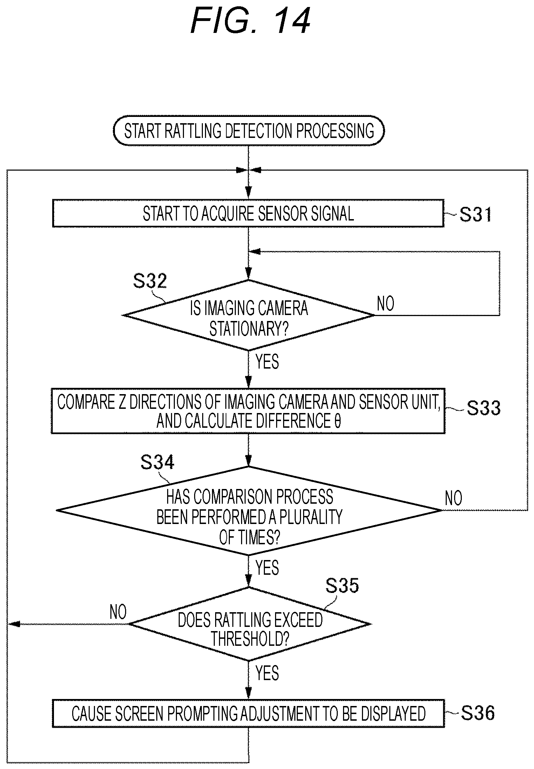

Next, rattling detection processing in the automatic mode will be described with reference to the flowchart of Fig. 14. This processing is started, for example, after the radio button 72A of the automatic mode has been selected and the start button 73 has been pressed on the initial screen 71 of Fig. 8.

In step S31, the Z-direction determination units 32 and 33 start to acquire respective sensor signals supplied from the imaging camera 11 and the sensor unit 12, and supply the Z directions $_wZ_c$ and $_wZ_s$ to the attachment orientation determination unit 34. The sensor signal from the imaging camera 11 is also supplied to the stationariness determination unit 31. In step S31 and steps that follow, the acquisition of the sensor signals is continuously performed until the rattling detection processing terminates.

In step S32, the attachment orientation determination unit 34 determines whether or not the imaging camera 11 is stationary. The attachment orientation determination unit 34 determines whether or not the imaging camera 11 is stationary on the basis of whether or not a determination signal indicating a stationary state has been supplied from the stationariness determination unit 31. The process of step S32 is repeated until it is determined that the imaging camera 11 is stationary, and in a case where it has been determined that the imaging camera 11 is stationary, the processing proceeds to step S33.

In step S33, the attachment orientation determination unit 34 compares the Z direction $_wZ_c$ of the imaging camera 11 with the Z direction $_wZ_s$ of the sensor unit 12, and calculates a difference $\theta$.

In step S34, the attachment orientation determination unit 34 determines whether the comparison process has been performed a certain plural number of times that has been determined in advance. In a case where it has been determined in step S34 that the comparison process has not been performed the certain plural number of times, the processing returns to step S31, and the processes described above are repeated.

On the other hand, in a case where it has been determined in step S34 that the comparison process has been performed the certain plural number of times, the processing proceeds to step S35, and the attachment orientation determination unit 34 determines whether rattling exceeds a threshold, and stated another way, calculates an average $\theta_{AVE}$ of the certain plural number of differences $\theta$, and determines whether there is a portion that exceeds a threshold that has been set in advance relative to the average $\theta_{AVE}$ from among the certain plural number of differences $\theta$.

In a case where it has been determined in step S35 that rattling does not exceed the threshold, the processing returns to step S31, and the processes described above are repeated.

On the other hand, in a case where it has been determined in step S35 that rattling exceeds the threshold, the processing proceeds to step S36, and the attachment orientation determination unit 34 supplies a result of comparison including a rattling failure to the display control unit 35. The display control unit 35 causes the display device 14 to display a screen prompting the user to adjust rattling. For example, a screen displaying the message "There is rattling in attachment of sensor unit. Please adjust.". The user may be prompted to adjust rattling by using an output indicating a warning, such as sound (a buzzer or message sound) or an error lamp, in contrast to a warning using a screen (a video).

After step S36, the processing returns to step S31 again, and the processes described above are repeated. The rattling detection processing of Fig. 14 terminates, for example, when power is turned off by using a power-off button.

By performing the rattling detection processing of Figs. 13 and 14, rattling can be easily checked in attachment of the imaging camera 11 and the sensor unit 12, and can be adjusted as necessary.

In the rattling detection processing of Figs. 13 and 14, the comparison process is performed a plurality of times, but does not necessarily need to be performed a plurality of times, and is only required to be performed at least once. How many times rattling detection will be performed may be able to be set on a setting screen or the like.

<7. Computer configuration example>

A series of processes performed by the signal processing apparatus 13 can be performed by hardware, or can be performed by software. In a case where the series of processes is performed by software, a program that configures the software is installed in a computer. Here, the computer includes a microcomputer that is incorporated into dedicated hardware, for example, a general-purpose personal computer that can perform various functions by installing various programs, and the like.

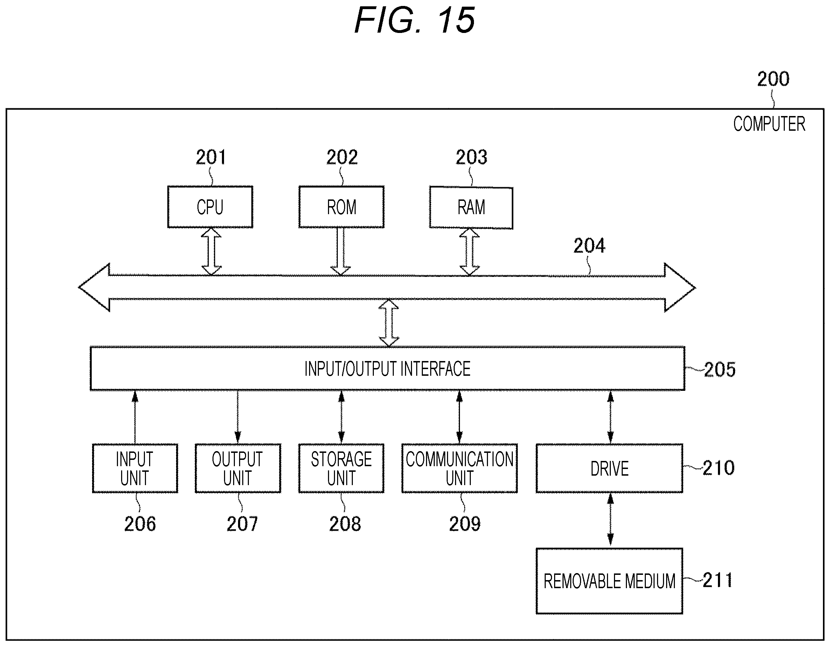

Fig. 15 is a block diagram illustrating a configuration example of hardware of a computer 200 serving as the signal processing apparatus 13 that performs the series of processes described above by using a program.

In the computer 200, a central processing unit (CPU) 201, a read only memory (ROM) 202, and a random access memory (RAM) 203 are mutually connected by a bus 204.

The bus 204 is further connected to an input/output interface 205. The input/output interface 205 is connected to an input unit 206, an output unit 207, a storage unit 208, a communication unit 209, and a drive 210.

The input unit 206 includes a keyboard, a mouse, a microphone, a touch panel, an input terminal, or the like. The output unit 207 includes a display, a speaker, an output terminal, or the like. The storage unit 208 includes a hard disk, a solid state drive (SSD), a RAM disk, a non-volatile memory, or the like. The communication unit 209 includes a communication interface that performs communication, such as a USB, an HDMI (registered trademark), Bluetooth, Wi-Fi, or a LAN. The drive 210 drives a removable medium 211 such as a magnetic disk, an optical disk, a magneto-optical disk, or a semiconductor memory.

In the computer 200 configured as described above, for example, the CPU 201 loads a program stored in the storage unit 208 into the RAM 203 via the input/output interface 205 and the bus 204 and executes the program, and therefore the series of processes described above is performed. In the RAM 203, data or the like that is necessary for the CPU 201 to perform various types of processing is also appropriately stored.

The program to be executed by (the CPU 201 of) the computer 200 can be provided, for example, by being recorded in the removable medium 211 serving as a package medium or the like. Furthermore, the program can be provided via a wired or wireless transmission medium such as a local area network, the Internet, or digital satellite broadcasting.

In the computer, the program can be installed in the storage unit 208 via the input/output interface 205 by mounting the removable medium 211 on the drive 210. Furthermore, the program can be received by the communication unit 209 via the wired or wireless transmission medium and can be installed in the storage unit 208. In addition, the program can be installed in advance in the ROM 202 or the storage unit 208.

Note that the program to be executed by the computer may be a program in which processes are performed in time series in accordance with the order described herein, or may be a program in which processes are performed in parallel or at a necessary timing such as when a call is made.

Needless to say, the steps described in the flowcharts may be performed in time series in the described order, or may be performed in parallel or at a necessary timing such as when a call is made, without necessarily being processed in time series.

Herein, a system means a set of a plurality of components (apparatuses or devices, modules (parts), or the like), and it does not matter whether or not all of the components are located in the same housing. Accordingly, both a plurality of apparatuses or devices that is housed in separate housings and is connected via a network and a single apparatus in which a plurality of modules is housed in a single housing are systems.

Embodiments of the present disclosure are not limited to the embodiment described above, and various modifications can be made without departing from the gist of the technology of the present disclosure.

For example, a mode in which some of the configurations described above are appropriately combined can be adopted.

The technology of the present disclosure can have a configuration of cloud computing in which a single function is shared and processed in cooperation by a plurality of apparatuses or devices via a network.

Furthermore, each of the steps described in the flowcharts described above can be performed by a single apparatus or device, or can be shared and performed by a plurality of apparatuses or devices. Moreover, in a case where a single step includes a plurality of processes, the plurality of processes included in the single step can be performed by a single apparatus or device, or can be shared and performed by a plurality of apparatuses or devices.

Note that the effects described herein are merely examples and are not restrictive, and effects other than those described herein may be exhibited.

Note that the technology of the present disclosure can adopt the following configurations.

(1) A camera system including:

an imaging camera that includes an inertial sensor;
a sensor unit that includes an inertial sensor; and
a signal processing apparatus that performs rattling detection on the sensor unit attached to the imaging camera,
in which the signal processing apparatus includes:

a first direction determination unit that determines a predetermined axial direction of the imaging camera from a sensor signal of the inertial sensor of the imaging camera;
a second direction determination unit that determines an axial direction of the sensor unit from a sensor signal of the inertial sensor of the sensor unit, the axial direction being identical to the predetermined axial direction; and
an orientation determination unit that compares the axial directions of the imaging camera and the sensor unit, and performs the rattling detection.

(2) The camera system according to (1),

in which the signal processing apparatus further includes
a stationariness determination unit that determines whether the imaging camera is stationary, and
in a state where the imaging camera is stationary, the orientation determination unit compares the axial directions of the imaging camera and the sensor unit, and performs the rattling detection.

(3) The camera system according to (2),
in which the stationariness determination unit determines whether the imaging camera is stationary after a swing motion.

(4) The camera system according to any of (1) to (3),
in which the orientation determination unit performs comparison between the axial directions of the imaging camera and the sensor unit a plurality of times, and performs the rattling detection on the basis of a plurality of results of the comparison.

(5) The camera system according to any of (1) to (4),
in which the signal processing apparatus has:
a first mode for performing the rattling detection in a background; and a second mode for instructing a user to perform a motion and performing the rattling detection.

(6) The camera system according to any of (1) to (5),

in which the signal processing apparatus further includes
a display control unit that causes a result of the rattling detection to be displayed on a screen.

(7) A signal processing apparatus including

a display control unit that performs control to display a screen on which rattling detection is performed in attachment of a sensor unit from a sensor signal of an inertial sensor of an imaging camera and a sensor signal of an inertial sensor of the sensor unit attached to the imaging camera,
in which the display control unit performs control to display:

a first screen that issues an instruction of at least one of a swing motion or a stationary state of the imaging camera; and
a second screen that displays a result of comparison between the sensor signal of the inertial sensor of the imaging camera in the stationary state and the sensor signal of the inertial sensor of the sensor unit.

(8) The signal processing apparatus according to (7)
in which the display control unit causes the first screen to be repeatedly displayed a plurality of times, and causes a user to execute the swing motion and the stationary state of the imaging camera a plurality of times.
(9) The signal processing apparatus according to (7) or (8),
in which the display control unit further causes a third screen to be displayed on the basis of one or more of the results of comparison, the third screen displaying a result of the rattling detection.
(10) The signal processing apparatus according to (9),
in which the display control unit displays a portion where the result of comparison is greater than a threshold on the third screen.
(11) The signal processing apparatus according to (9) or (10),
in which the display control unit displays an average value of the result of comparison on the third screen.
(12) The signal processing apparatus according to any of (7) to (11),
in which the display control unit causes a fourth screen to be displayed in a case where one or more of the results of comparison are greater than a threshold, the fourth screen prompting adjustment of rattling.

REFERENCE SIGNS LIST

| | |
|---|---|
| 1 | Camera system |
| 11 | Imaging camera |
| 11m | IMU |
| 12 | Sensor unit |
| 12m | IMU |
| 13 | Signal processing apparatus |
| 14 | Display device |
| 31 | Stationariness determination unit |
| 32 | Z-direction determination unit |
| 33 | Z-direction determination unit |
| 34 | Attachment orientation determination unit |
| 35 | Display control unit |
| 71 | Initial screen |
| 81 | Manual mode start screen |
| 91 | Swing motion instruction screen |
| 101 | Screen during rattling detection |
| 111 | Rattling detection result screen |
| 200 | Computer |
| 202 | ROM |
| 204 | Bus |
| 205 | Input/output interface |
| 206 | Input unit |
| 207 | Output unit |
| 208 | Storage unit |
| 209 | Communication unit |
| 210 | Drive |
| 211 | Removable medium |

**Claims**

1. A camera system comprising:

   an imaging camera that includes an inertial sensor;
   a sensor unit that includes an inertial sensor; and
   a signal processing apparatus that performs rattling detection on the sensor unit attached to the imaging camera,
   wherein the signal processing apparatus includes:

a first direction determination unit that determines a predetermined axial direction of the imaging camera from a sensor signal of the inertial sensor of the imaging camera;

a second direction determination unit that determines an axial direction of the sensor unit from a sensor signal of the inertial sensor of the sensor unit, the axial direction being identical to the predetermined axial direction; and

an orientation determination unit that compares a plurality of the axial directions of the imaging camera and the sensor unit, and performs the rattling detection.

2. The camera system according to claim 1,

wherein the signal processing apparatus further includes
a stationariness determination unit that determines whether the imaging camera is stationary, and
in a state where the imaging camera is stationary, the orientation determination unit compares the plurality of the axial directions of the imaging camera and the sensor unit, and performs the rattling detection.

3. The camera system according to claim 2,
wherein the stationariness determination unit determines whether the imaging camera is stationary after a swing motion.

4. The camera system according to claim 1,
wherein the orientation determination unit performs comparison between the plurality of the axial directions of the imaging camera and the sensor unit a plurality of times, and performs the rattling detection on a basis of a plurality of results of the comparison.

5. The camera system according to claim 1,
wherein the signal processing apparatus has:
a first mode for performing the rattling detection in a background; and a second mode for instructing a user to perform a motion and performing the rattling detection.

6. The camera system according to claim 1,

wherein the signal processing apparatus further includes
a display control unit that causes a result of the rattling detection to be displayed on a screen.

7. A signal processing apparatus comprising

a display control unit that performs control to display a screen on which rattling detection is performed in attachment of a sensor unit from a sensor signal of an inertial sensor of an imaging camera and a sensor signal of an inertial sensor of the sensor unit attached to the imaging camera,
wherein the display control unit performs control to display:

a first screen that issues an instruction of at least one of a swing motion or a stationary state of the imaging camera; and
a second screen that displays a result of comparison between the sensor signal of the inertial sensor of the imaging camera in the stationary state and the sensor signal of the inertial sensor of the sensor unit.

8. The signal processing apparatus according to claim 7
wherein the display control unit causes the first screen to be repeatedly displayed a plurality of times, and causes a user to execute the swing motion and the stationary state of the imaging camera a plurality of times.

9. The signal processing apparatus according to claim 7,
wherein the display control unit further causes a third screen to be displayed on a basis of one or more of a plurality of the results of comparison, the third screen displaying a result of the rattling detection.

10. The signal processing apparatus according to claim 9,
wherein the display control unit displays a portion where the result of comparison is greater than a threshold on the third screen.

11. The signal processing apparatus according to claim 9,
   wherein the display control unit displays an average value of the result of comparison on the third screen.

12. The signal processing apparatus according to claim 7,
   wherein the display control unit causes a fourth screen to be displayed in a case where one or more of a plurality of the results of comparison are greater than a threshold, the fourth screen prompting adjustment of rattling.

# FIG. 1

SENSOR UNIT

IMAGING CAMERA

# FIG. 2

SENSOR UNIT

FLEXIBLE ARM

IMAGING CAMERA

*FIG. 3*

# FIG. 4

SENSOR SIGNAL

SENSOR SIGNAL

**IMAGING CAMERA** 11
- 11m IMU

**SENSOR UNIT** 12
- 12m IMU

**STATIONARINESS DETERMINATION UNIT** 31

**Z-DIRECTION DETERMINATION UNIT** 32 → $wZc=(x_1,y_1,z_1)$

**Z-DIRECTION DETERMINATION UNIT** 33 → $wZs=(x_2,y_2,z_2)$

**ATTACHMENT ORIENTATION DETERMINATION UNIT** 34

**DISPLAY CONTROL UNIT** 35

**SIGNAL PROCESSING APPARATUS** 13

**DISPLAY DEVICE** 14

1

## FIG. 5

SWING MOTION      SWING MOTION      SWING MOTION

IMAGING CAMERA $wZc$  |  SENSOR UNIT $wZs$      IMAGING CAMERA $wZc$  |  SENSOR UNIT $wZs$      SENSOR UNIT $wZs$  |  IMAGING CAMERA $wZc$

$\theta_0$      $\theta_1$      $\theta_2$

$t=T_0$      $t=T_1$      $t=T_2$   · · · ·

STATIONARY STATE FIRST TIME      STATIONARY STATE SECOND TIME      STATIONARY STATE THIRD TIME

EP 4 776 060 A1

## FIG. 6

# FIG. 7

WORLD COORDINATE SYSTEM

WORLD COORDINATE SYSTEM WITH
GRAVITY DIRECTION AS NEGATIVE DIRECTION

Sensor Unit IMU COORDINATE SYSTEM

WORLD COORDINATE SYSTEM

Camera IMU COORDINATE SYSTEM

$$\theta = \cos^{-1}(wZc \cdot wZs)$$

EP 4 776 060 A1

## FIG. 8

71

sensor unit attachment test

72A ○ Auto  Mode

72B ● Manual  Mode

73 Start          Cancel 74

## FIG. 9

81

sensor unit attachment test

Manual Mode

check 82

# FIG. 10

91

sensor unit attachment test

swing camera

92

done

93

# FIG. 11

101

sensor unit attachment test

checking ....

$\theta$

t

102

# FIG. 12

111

## sensor unit attachment test

done ... unstable attachment detected

112

check

done

113

114

# FIG. 13

```
( START RATTLING DETECTION PROCESSING )
                    │
                    ▼
┌───────────────────────────────────────────────┐
│          ISSUE INSTRUCTION OF SWING MOTION      │──S1
└───────────────────────────────────────────────┘
                    │
                    ▼
        S2
        ◇ HAS SWING MOTION        ──NO──┐
          TERMINATED?                    │
                    │ YES                 │
                    ▼                     │
┌───────────────────────────────────────────────┐
│          START TO ACQUIRE SENSOR SIGNAL         │──S3
└───────────────────────────────────────────────┘
                    │
                    ▼
        S4
        ◇ IS IMAGING CAMERA       ──NO──┐
          STATIONARY?                    │
                    │ YES                 │
                    ▼                     │
┌───────────────────────────────────────────────┐
│ COMPARE Z DIRECTIONS OF IMAGING CAMERA AND SENSOR UNIT, │──S5
│        AND CALCULATE DIFFERENCE θ               │
└───────────────────────────────────────────────┘
                    │
                    ▼
┌───────────────────────────────────────────────┐
│ CAUSE SCREEN DURING RATTLING DETECTION TO BE DISPLAYED │──S6
│           ON THE BASIS OF DIFFERENCE θ          │
└───────────────────────────────────────────────┘
                    │
                    ▼
        S7
        ◇ HAS COMPARISON PROCESS
          BEEN PERFORMED A PLURALITY  ──NO──┐
          OF TIMES?
                    │ YES
                    ▼
┌───────────────────────────────────────────────┐
│ CAUSE RATTLING DETECTION RESULT SCREEN TO BE DISPLAYED │──S8
└───────────────────────────────────────────────┘
                    │
                    ▼
                              S9
   YES◇ HAS RECHECK INSTRUCTION
        BEEN ISSUED?
                    │ NO
                    ▼
                ( END )
```

# FIG. 14

```
( START RATTLING DETECTION PROCESSING )
                    │
        ┌───────────┼──────────────────────────┐
        │           ▼                           │
        │   ┌─────────────────────────┐         │
        │   │ START TO ACQUIRE SENSOR SIGNAL │──S31   │
        │   └─────────────────────────┘         │
        │           │                           │
        │           ▼                    ┌───────┤
    S32 │      ◇─────────────◇       NO  │       │
        │     ◇ IS IMAGING CAMERA ◇──────┘       │
        │      ◇  STATIONARY?  ◇                 │
        │       ◇───────────◇                    │
        │           │ YES                        │
        │           ▼                            │
        │  ┌──────────────────────────────────┐ │
        │  │ COMPARE Z DIRECTIONS OF IMAGING   │─S33
        │  │ CAMERA AND SENSOR UNIT,           │ │
        │  │ AND CALCULATE DIFFERENCE θ        │ │
        │  └──────────────────────────────────┘ │
        │           │                            │
    S34 │           ▼                            │
        │     ◇───────────────◇       NO         │
        │    ◇ HAS COMPARISON  ◇─────────────────┘
        │   ◇ PROCESS BEEN     ◇
        │    ◇ PERFORMED A     ◇
        │     ◇ PLURALITY OF   ◇
        │      ◇  TIMES?    ◇
        │           │ YES
        │           ▼             S35
        │  NO  ◇───────────◇
     ◄──┼──────◇ DOES RATTLING ◇
        │      ◇  EXCEED      ◇
        │       ◇ THRESHOLD? ◇
        │           │ YES
        │           ▼
        │  ┌──────────────────────────────────────┐
        │  │ CAUSE SCREEN PROMPTING ADJUSTMENT TO  │─S36
        │  │ BE DISPLAYED                          │
        │  └──────────────────────────────────────┘
        │           │
        └───────────┘
```

# FIG. 15

COMPUTER 200

- CPU 201
- ROM 202
- RAM 203

204

INPUT/OUTPUT INTERFACE — 205

- INPUT UNIT 206
- OUTPUT UNIT 207
- STORAGE UNIT 208
- COMMUNICATION UNIT 209
- DRIVE — 210

REMOVABLE MEDIUM — 211

## INTERNATIONAL SEARCH REPORT

| International application No. |
| --- |
| **PCT/JP2024/029767** |

### A. CLASSIFICATION OF SUBJECT MATTER

*G03B 17/56*(2021.01)i; *F16M 11/04*(2006.01)i; *H04N 23/60*(2023.01)i; *H04N 23/63*(2023.01)i
FI: G03B17/56 A; F16M11/04 Z; G03B17/56 Z; H04N23/60; H04N23/63 310

According to International Patent Classification (IPC) or to both national classification and IPC

### B. FIELDS SEARCHED

Minimum documentation searched (classification system followed by classification symbols)

G03B17/56; F16M11/04; H04N23/60; H04N23/63

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2018/016514 A1 (PRODRONE CO., LTD.) 25 January 2018 (2018-01-25) paragraphs [0001]-[0032], fig. 1-4 | 1-12 |
| Y | JP 2021-147772 A (HITACHI CONSTRUCTION MACHINERY CO., LTD.) 27 September 2021 (2021-09-27) paragraphs [0005], [0042], [0057]-[0062], [0071], fig. 1 | 1-12 |
| Y | JP 2006-47038 A (YAMAHA CORPORATION) 16 February 2006 (2006-02-16) paragraphs [0012], [0022]-[0106], fig. 1-10 | 7-12 |

☐ Further documents are listed in the continuation of Box C.   ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **12 September 2024** | **08 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/029767**

| Patent document cited in search report | | | Publication date (day/month/year) | Patent family member(s) | Publication date (day/month/year) |
|---|---|---|---|---|---|
| WO | 2018/016514 | A1 | 25 January 2018 | (Family: none) | |
| JP | 2021-147772 | A | 27 September 2021 | (Family: none) | |
| JP | 2006-47038 | A | 16 February 2006 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018016514 A